# EUROPÄISCHE PATENTSCHRIFT

(11) **EP 4 577 417 B1**
(45) Veröffentlichungstag und Bekanntmachung des Hinweises auf die Patenterteilung: **29.04.2026**
(21) Anmeldenummer: 23745071.3
(22) Anmeldetag: 13.07.2023
(51) Int. Cl.: B60C 11/03, B60C 11/12, B60C 11/13

(54) **FAHRZEUGLUFTREIFEN**
PNEUMATIC VEHICLE TIRE
PNEU DE VÉHICULE

(30) Priorität: 25.08.2022 DE 102022208784
(43) Veröffentlichungstag der Anmeldung: 02.07.2025
(73) Patentinhaber: Continental Reifen Deutschland GmbH, 30175 Hannover (DE)
(72) Erfinder: FUCHS, Artur, 30175 Hannover (DE); BROCKMANN, Jürgen, 30175 Hannover (DE); HEINHAUPT, Torsten, 30175 Hannover (DE); SENG, Matthias, 30175 Hannover (DE); BAUER, Claudia, 30175 Hannover (DE)
(74) Vertreter: Continental Corporation
(86) Internationale Anmeldenummer: PCT/DE2023/200145
(87) Internationale Veröffentlichungsnummer: WO 2024/041706

(56) Entgegenhaltungen:
- EP-A1- 1 695 845
- EP-A1- 3 078 505
- WO-A1-2020/012279
- US-A1- 2020 130 418

## Beschreibung

Die Erfindung betrifft einen Fahrzeugluftreifen mit einem laufrichtungsgebunden ausgeführten Laufstreifen mit V-förmig zueinander verlaufenden Schrägrillen und jeweils zumindest zwei zwischen in Umfangsrichtung benachbarten Schrägrillen verlaufenden, vorzugsweise bezüglich der Umfangsrichtung gegensinnig zu den Schrägrillen geneigten, weiteren Rillen,
wobei die Schrägrillen und die weiteren Rillen den Laufstreifen in schulterseitige Profilblöcke, halbmittige Profilblöcke, zu den in der einen Laufstreifenhälfte liegenden, halbmittigen Profilblöcken benachbarte mittlere Profilblöcke und zu den in der anderen Laufstreifenhälfte liegenden, halbmittigen Profilblöcken benachbarte mittlere Profilblöcke gliedern,
wobei die Schrägrillen abwechselnd vor der Reifenäquatorialebene endende, erste Schrägrillen mit einem in einen mittleren Profilblock hineinverlaufenden Rillenendabschnitt und die mittleren Profilblöcke mitbegrenzende, zweite Schrägrillen sind,
wobei die zu dem einen Laufstreifenrand verlaufenden ersten Schrägrillen zu den zu dem anderen Laufstreifenrand verlaufenden ersten Schrägrillen und die zu dem einen Laufstreifenrand verlaufenden zweiten Schrägrillen zu den zu dem anderen Laufstreifenrand verlaufenden zweiten Schrägrillen in Umfangsrichtung versetzt sind.

Ein derartiger Fahrzeugluftreifen ist beispielsweise aus der EP 3 785 938 B1 bekannt. Dieser Reifen weist einen laufrichtungsgebunden ausgeführten Laufstreifen mit einer im Bereich der Reifenäquatorialebene verlaufenden, zentralen Umfangsrille, V-förmig zueinander verlaufenden Schrägrillen sowie mit jeweils zwei zwischen in Umfangsrichtung benachbarten Schrägrillen verlaufenden, bezüglich der Umfangsrichtung gegensinnig zu den Schrägrillen geneigten, weiteren Rillen auf. Die Schrägrillen sind in Umfangsrichtung abwechselnd vor der Reifenäquatorialebene endende, erste Schrägrillen mit einem in einen mittleren Profilblock hineinverlaufenden Rillenendabschnitt und laufstreifeninnenseitig über die ersten Schrägrillen hinausragende, an den außenseitigen Knickstellen der zickzack-förmig verlaufenden Umfangsrille einmündende, zweite Schrägrillen. Die an der zentralen Umfangsrille liegenden mittleren Profilblöcke weisen eine hohe Umfangs- und Quersteifigkeit auf, wodurch gute Handlingeigenschaften auf schneebedeckter und trockener Fahrbahn erzielt werden.

Fahrzeugluftreifen der eingangs genannten Art eignen sich - sofern der Laufstreifen aus einem entsprechenden, an sich bekannten Gummimaterial besteht - für den Ganzjahreseinsatz. Bei Ganzjahresreifen ist es von entscheidender Bedeutung, dass sowohl gute Fahreigenschaften auf trockener Fahrbahn als auch gute Fahreigenschaften auf schneebedeckter Fahrbahn sichergestellt sind. Aktuell werden wintertaugliche Reifen mit dem "Alpine"-Symbol (3PMSF, Three Peak Mountain Snow Flake) an der Seitenwand versehen, welches aktuell das einzige Symbol ist, das die Wintereigenschaften des Reifens auch tatsächlich bestätigt und zukünftig die M+S-Kennzeichnung ersetzen soll. Das Alpine-Symbol garantiert, dass der Reifen einem standardisierten Test der zuständigen Behörde der EU unterzogen wurde und für den Einsatz unter schwierigen Wetterverhältnissen besonders gut geeignet ist.

Weitere Fahrzeugreifen mit profiliertem Laufstreifen sind offenbart in der EP 3 078 505 A1, WO 2020/012279 A1, US 2020/130418 A1 and EP 1 695 845 A1.

Der Erfindung liegt die Aufgabe zugrunde, einen Fahrzeugluftreifen der eingangs genannten Art im Hinblick auf seine Fahreigenschaften auf trockener Fahrbahn und auf schneebedeckter Fahrbahn weiter zu verbessern, insbesondere derart, dass sich der Reifen für den Ganzjahreseinsatz eignet und die 3PMSF-Kennzeichnung erhalten kann.

Gelöst wird die gestellte Aufgabe erfindungsgemäß dadurch, dass die zweiten Schrägrillen jeweils einen über die Reifenäquatorialebene hinausverlaufenden, zwischen zwei mittleren Profilblöcken ausgebildeten und in eine zum jeweils anderen Laufstreifenrand verlaufende zweite Schrägrille einmündenden Rillenendabschnitt aufweisen, wobei in jedem mittleren Profilblock an jeder Seite des in ihn hineinverlaufenden Rillenendabschnittes der jeweiligen ersten Schrägrille jeweils zumindest ein in Draufsicht zum hineinverlaufenden Rillenendabschnitt bezüglich der Umfangsichtung gleichsinnig geneigter, in die jeweils angrenzende weitere Rille einmündender Einschnitt mit einer Breite von 0,4 mm bis 1,2 mm und einer maximalen Tiefe von zumindest 3,0 mm und höchstens 100% der Profiltiefe und zumindest ein zwischen den einmündenden Einschnitten verlaufender und zu diesen bezüglich der Umfangsrichtung gegensinnig geneigter Verbindungseinschnitt mit einer Tiefe von 1,2 mm bis 2,5 mm und einer Breite von 0,4 mm bis 1,6 mm verläuft.

Die mittleren Profilblöcke sind daher jeweils mit einer speziellen Einschnittkombination aus zumindest zwei in die entsprechenden Rillen einmündenden Einschnitten und einem zwischen diesen Einschnitten verlaufenden Verbindungseinschnitt versehen, wobei diese Einschnittkombination den in den jeweiligen mittleren Profilblock hineinverlaufenden Rillenendabschnitt umgibt. Die tiefer ausgeführten, einmündenden Einschnitte öffnen sich beim Abplatten des Laufstreifens im Latsch (beim Durchlaufen am Untergrund) stärker als der seichter ausgeführte Verbindungseinschnitt, wodurch die einmündenden Einschnitte für den Schneegriff vorteilhafte Griffkanten zur Verfügung stellen. Der seichtere Verbindungseinschnitt sorgt in Kombination mit tiefer ausgeführten, einmündenden Einschnitten für eine gleichmäßige bzw. im Wesentlichen gleichmäßige Umfangs- und Quersteifigkeit der mittleren Profilblöcke, wodurch diese ein gleichmäßiges Verformungsverhalten sicherstellen, was für die Fahreigenschaften, insbesondere die Handlingeigenschaften, auf trockener Fahrbahn günstig ist.

Gemäß einer bevorzugten Ausführung endet jeder einmündende Einschnitt innerhalb des mittleren Profilblockes am Verbindungseinschnitt, sodass die einmündenden Einschnitte mit dem Verbindungseinschnitt eine U-förmige Einschnittkombination bilden. Dadurch wird die Steifigkeit der mittleren Profilblöcke auf gleichmäßige Weise und in deutlich begrenztem Ausmaß reduziert, sodass die mittleren Profilblöcke eine hohe und gleichmäßige Umfangs- und Quersteifigkeit aufweisen. Dies ist für die Handlingeigenschaften, insbesondere auf trockener Fahrbahn, von zusätzlichem Vorteil.

Ferner ist es bevorzugt, wenn jeder einmündende Einschnitt in einem in Verlängerung seiner Einschnittmittellinie ermittelten Abstand von 3,0 mm bis 10,0 mm, insbesondere von 4,0 mm bis 8,0 mm, vor einem den mittleren Profilblock mitbegrenzenden, einmündenden Rillenendabschnitt der entsprechenden zweiten Schrägrille endet. Dies ist ebenfalls für die Umfangs- und Quersteifigkeit der mittleren Profilblöcke und somit für die Handlingeigenschaften, insbesondere auf trockener Fahrbahn, vorteilhaft.

Eine weitere bevorzugte Ausführung ist dadurch gekennzeichnet, dass jeder einmündende Einschnitt zu den an den Schrägrillen ausgebildeten Blockkanten des mittleren Profilblockes jeweils einen senkrecht zu seiner Einschnittmittellinie ermittelten Abstand von 40% bis 60%, insbesondere von 45% bis 55%, der senkrecht zu und zwischen den Blockkanten ermittelten maximalen Blockbreite des mittleren Profilblockes aufweist. Dies trägt zu einer gleichmäßigen Umfangs- und Quersteifigkeit der mittleren Profilblöcke bei.

Eine weitere bevorzugte Ausführung ist dadurch gekennzeichnet, dass in jedem mittleren Profilblock zwischen den einmündenden Einschnitten ein den mittleren Profilblock in zwei Blocksegmente teilender, den Verbindungseinschnitt kreuzender Kurzeinschnitt mit einer Breite von 0,4 mm bis 1,6 mm, insbesondere von 0,6 mm bis 1,2 mm, und einer maximalem Tiefe von 70% bis 100% der Profiltiefe ausgebildet ist, wobei der Kurzeinschnitt in den in den mittleren Profilblock hineinverlaufenden Rillenendabschnitt der jeweiligen ersten Schrägrille und in den an mittleren Profilblock angrenzenden, einmündenden Rillenendabschnitt der jeweiligen zweiten Schrägrille einmündet. Die mittleren Profilblöcke sind somit in zwei Blocksegmente geteilt, wodurch deren Deformationsverhalten beim Durchlaufen des Footprints verbessert ist, was für die Fahreigenschaften auf trockener Fahrbahn vorteilhaft ist. Gleichzeitig sind durch den Kurzeinschnitt weitere Griffkanten an der Laufstreifenperipherie zur Verfügung gestellt, sodass auch die Schneegriffeigenschaften weiter verbessert sind. Der Kurzeinschnitt stellt somit eine besonders vorteilhafte Erweiterung der erwähnten, speziellen Einschnittkombination dar.

Eine erste vorteilhafte Weiterentwicklung der letztgenannten bevorzugten Ausführung besteht darin, dass der Kurzeinschnitt, in Draufsicht betrachtet, gerade oder gebogen sowie zur Umfangsrichtung jeweils unter einem Winkel von 30° bis 50°, insbesondere von 35° bis 45°, verläuft. Dies ist vor allem für das erwähnte Deformationsverhalten und damit für die Fahreigenschaften auf trockener Fahrbahn vorteilhaft.

Eine zweite vorteilhafte Weiterentwicklung der letztgenannten bevorzugten Ausführung besteht darin, dass der Kurzeinschnitt - in Draufsicht betrachtet und bezogen auf seine Einschnittmittellinie - in tangentialer Verlängerung der Rillenmittlinie der ersten Schrägrille, welche den in den zugehörigen mittleren Profilblock hineinverlaufenden Rillenendabschnitt aufweist, verläuft. Dies ist ebenfalls für das erwähnte Deformationsverhalten und damit für die Fahreigenschaften auf trockener Fahrbahn vorteilhaft.

Gemäß einer weiteren bevorzugten Ausführung verläuft der einmündende Rillenendabschnitt der zweiten Schrägrillen, in Draufsicht betrachtet, an seiner Einmündung zur Umfangsrichtung unter einem Winkel von 20° bis 40°, insbesondere von 25° bis 35°, und bevorzugt von zumindest 30°. Dieser Winkel verleiht dem Laufstreifenprofil im Bereich der Reifenäquatorialebene einen ausgeprägten zick-zack-förmigen Verlauf der aufeinanderfolgenden Rillenendabschnitte der zweiten Schrägrillen. Dadurch sammelt sich beim Fahren auf entsprechend tiefen Schnee sehr gut Schnee im Bereich der Rillenendabschnitte an, wodurch über den Effekt der Schnee-Schnee-Reibung die Schneeperformance weiter verbessert ist.

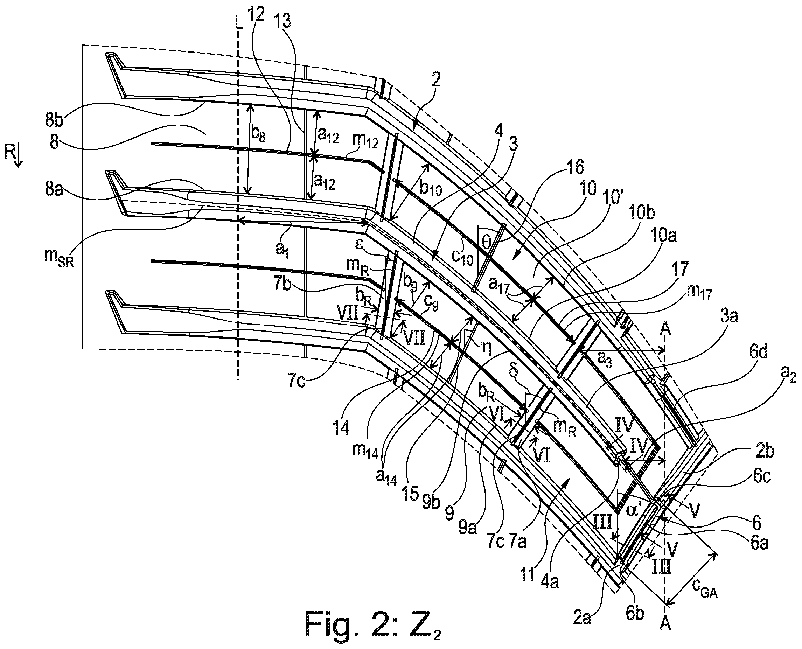

Eine weitere bevorzugte Ausführung ist dadurch gekennzeichnet, dass die weiteren Rillen derart ausgebildet sind, dass die halbmittigen Profilblöcke abwechselnd erste halbmittige Profilblöcke mit einer an der Laufstreifenperipherie entlang einer zu den Blockkanten übereinstimmend beabstandeten Blockmittellinie gemessenen ersten Blocklänge und zweite halbmittige Profilblöcke mit einer an der Laufstreifenperipherie entlang einer zu den Blockkanten übereinstimmend beabstandeten Blockmittellinie gemessenen, gegenüber der ersten Blocklänge größeren, zweiten Blocklänge sind, wobei beim Abrollen des Reifens bei Vorwärtsfahrt jeweils der erste halbmittige Profilblock vor dem von ihm durch eine erste Schrägrille getrennten, zweiten halbmittigen Profilblock in den Untergrund eintritt. Dadurch sind spezielle, langgezogene, makroblockartige Profilpositivstrukturen gebildet (Fig. 2 zeigt eine solche Struktur). Dies sorgt für besonders vorteilhaft ausbalancierte Fahreigenschaften auf trockener und auf schneebedeckter Fahrbahn.

Eine vorteilhafte Variante der letzten genannten bevorzugten Ausführung ist dadurch gekennzeichnet, dass in jedem zweiten halbmittigen Profilblock jeweils ein Einschnitt mit einer Breite von 0,6 mm bis 1,0 mm und einer Tiefe von 70% bis 100%, insbesondere von bis zu 75%, der Profiltiefe ausgebildet ist, welcher, in Draufsicht betrachtet, gerade, zur Umfangsrichtung gegensinnig zu den Schrägrillen geneigt und zur Umfangsrichtung unter einem Winkel von 20° bis 30° verläuft sowie den zweiten halbmittigen Profilblock bezüglich seiner Blocklänge vorzugsweise mittig in zwei Blocksegmente teilt. Dies ist für die Beweglichkeit des zweiten halbmittigen Profilblocks und damit für dessen Deformationsverhalten beim Abplatten und somit für die Fahreigenschaften auf trockener Fahrbahn vorteilhaft.

Eine weitere bevorzugte Ausführung ist dadurch gekennzeichnet, dass die weiteren Rillen, welche sich weiter laufstreifeninnenseitig befinden und in dieselbe endende, erste Schrägrille einmünden, in Draufsicht betrachtet, gerade und miteinander fluchtend verlaufen und/oder dass die weiteren Rillen, welche sich weiter laufstreichaußenseitig befinden, in Draufsicht betrachtet, gerade verlaufen und in Umfangsrichtung bezüglich der axialen Richtung versatzfrei aufeinanderfolgen. Dies ist für due Steifigkeit der erwähnten makroblockartige Profilpositivstruktur und daher für die Trockenperformance vorteilhaft.

Bei einer weiteren bevorzugten Ausführung ist im einmündenden Rillenendabschnitt jeder zweiten Schrägrille jeweils zumindest eine, insbesondere genau eine, die Tiefe der zweiten Schrägrille lokal verringernde Grundanhebung ausgebildet, welche zwei mittlere Profilblöcke aneinander anbindet. Sämtliche mittleren Profilblöcke sind daher über Grundanhebungen miteinander verbunden und derart gegeneinander abgestützt, wodurch eine sich über den Reifenumfang erstreckende, zusammenhängende Profilpositivstruktur bereitgestellt ist, welche eine höhere Umfangs- und Quersteifigkeit als vergleichbare bekannte Profilpositivstrukturen aufweist. Diese zusammenhängende Profilpositivstruktur sorgt ebenfalls für verbesserte Fahreigenschaften auf trockener Fahrbahn.

Bei der letztgenannten bevorzugten Ausführung ist es günstig, wenn die Grundanhebung zumindest eines der, insbesondere sämtliche der folgenden Merkmale aufweist:
a) die Grundanhebung reicht bis zur am einmündenden Rillenendabschnitt der zweiten Schrägrille liegenden Rillenmündung oder weist zu dieser einen entlang der Rillenmittellinie am Niveau des Rillengrundes ermittelten Abstand von bis zu 2,0 mm auf,
b) die Grundanhebung ist in radialer Richtung durch eine Deckfläche begrenzt, welche in einer in radialer Richtung ermittelten konstanten Tiefe von 30% bis 70%, insbesondere von 45% bis 55%, der Profiltiefe verläuft,
c) die Grundanhebung weist - ermittelt entlang der Rillenmittellinie der zweiten Schrägrille sowie am Niveau des Rillengrundes der zweiten Schrägrille - eine Länge von 8,0 mm bis 20,0 mm, insbesondere von 10,0 mm bis 16,0 mm, auf,
d) die Grundanhebung ist mit einem die Grundanhebung in Erstreckungsrichtung der zweiten Schrägrille insbesondere mittig durchquerender Einschnitt mit einer Breite von 0,4 mm bis 0,8 mm versehen, welcher vorzugsweise gegenüber dem Niveau der Deckfläche eine Tiefe von zumindest 1,5 mm aufweist.

Die Positionierung der Grundanhebung gemäß Merkmal a) ist im Hinblick auf das Wasserdrainageverhalten günstig.

Die "Höhe" der Grundanhebung gemäß Merkmal b) und die Länge der Grundanhebung gemäß Merkmal c) sorgen jeweils für einen vorteilhaften Kompromiss zwischen der versteifenden Wirkung der Grundanhebung und dem Wasserdrainageverhalten.

Der Einschnitt gemäß Merkmal d) verbessert das Wasserdrainageverhalten im Bereich der Grundanhebung.

Eine weitere bevorzugte Ausführung ist dadurch gekennzeichnet, dass die Schrägrillen, in Draufsicht betrachtet, gerade oder durchgehend gebogen verlaufen oder dass sich die Schrägrillen, in Draufsicht betrachtet, jeweils aus einem gerade oder durchgehend gebogen verlaufenden, laufstreifeninnseitigen Rillenabschnitt, welcher mittlere Profilblöcke und halbmittige Profilblöcke mitbegrenzt, und einem gerade oder durchgehend gebogen verlaufenden, laufstreifenaußenseitigen Rillenabschnitt, welcher schulterseitige Profilblöcke mitbegrenzt, zusammensetzen.

Eine weitere bevorzugte Ausführung ist dadurch gekennzeichnet, dass die ersten Schrägrillen laufstreifeninnenseitig - bezogen auf die Rillenmittellinien - in einem in axialer Richtung ermittelten Abstand von 5,0 mm bis 15,0 mm vor der Reifenäquatorialebene enden. Dies ist für die Steifigkeit und das Biegeverhalten der mittleren Profilblöcke vorteilhaft und wirkt sich günstig auf Fahreigenschaften auf trockener Fahrbahn aus.

Weitere Merkmale, Vorteile und Einzelheiten der Erfindung werden nun anhand der Zeichnung, die schematisch ein Ausführungsbeispiel der Erfindung zeigt, näher beschrieben. Dabei zeigen
Fig. 1 eine vereinfachte Draufsicht auf eine Umfangsabschnitt eines in die Ebene abgewickelten Laufstreifens eines Fahrzeugluftreifens mit einer Ausführungsvariante der Erfindung,
Fig. 2 eine vergrößerte Draufsicht auf das Detail Z₂ der Fig. 1,
Fig. 3 einen Schnitt entlang der Linie III-III der Fig. 2,
Fig. 4 einen Schnitt entlang der Linie IV-IV der Fig. 2,
Fig. 5 einen Schnitt entlang der Linie V-V der Fig. 2,
Fig. 6 einen Schnitt entlang der Linie VI-VI der Fig. 2,
Fig. 7 einen Schnitt entlang der Linie VII-VII der Fig. 2,
Fig. 8 eine stark vergrößerte Draufsicht auf das Detail Z₈ der Fig. 1 und
Fig. 9 einen Schnitt entlang der Linie IX-IX der Fig. 8.

Gemäß der Erfindung ausgeführte Fahrzeugluftreifen sind Reifen für Kraftfahrzeuge, insbesondere für mehrspurige Kraftfahrzeuge, bevorzugt für Personenkraftwagen (PKWs), Vans (Transporter) oder SUVs, sowie vorzugsweise Reifen in Radialbauart für Felgen mit einem Felgendurchmesser von 18, 19, 20, 21, 22 oder 23 Zoll. Die Reifen sind insbesondere für den Ganzjahreseinsatz vorgesehen.

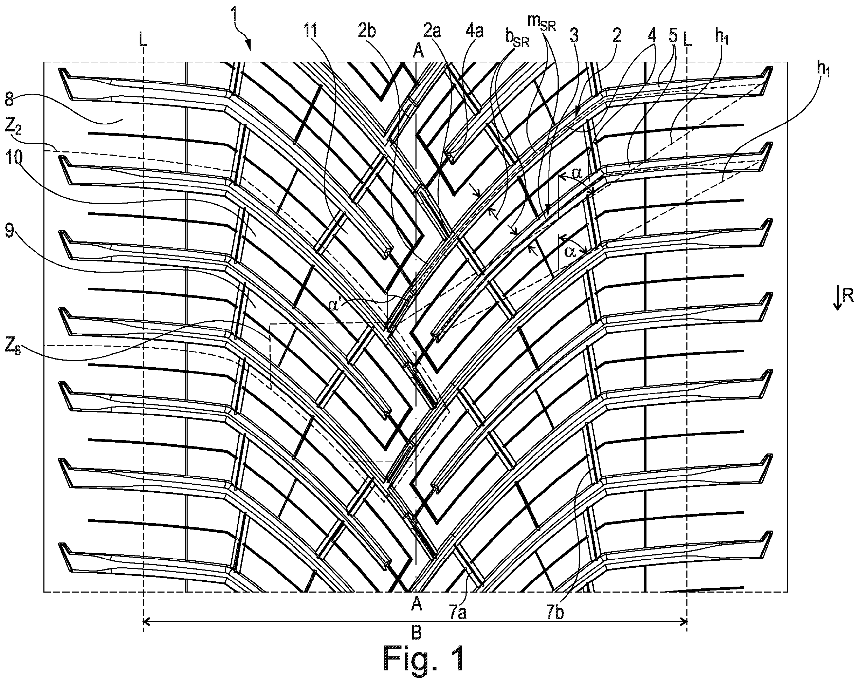

Fig. 1 zeigt eine Draufsicht auf einen Laufstreifen 1. Die Reifenäquatorialebene ist durch eine Linie A-A und die seitlichen Ränder der Bodenaufstandsfläche des Laufstreifens sind durch zwei Linien L gekennzeichnet. Die Bodenaufstandsfläche entspricht bekannter Weise dem statisch ermittelten Footprint (ermittelt mit einem auf einer Normfelge montierten Reifen, Last bei 70 % der maximalen Tragfähigkeit, Innendruck 85 % des Normdruckes, gemäß ETRTO-Standards) und weist in axialer Richtung eine Breite B auf. Der Laufstreifen 1 weist eine laufrichtungsgebundene Profilierung auf und ist derart am Fahrzeug zu montieren, dass er die durch den Pfeil R angedeutete Abrollrichtung bei Vorwärtsfahrt aufweist.

Der Laufstreifen 1 ist, wie an sich üblich, gemäß einem Verfahren der Pitchlängenvariation geräuschoptimiert und setzt sich aus in Umfangsrichtung aufeinanderfolgenden Pitches (gleichartig gestaltete Profilabschnitte) zusammen, wobei die in der einen Laufstreifenhälfte ausgebildeten Profilelemente um 30% bis 60%, vorzugsweise um mindestens 40%, einer mittleren Pitchlänge in Umfangsrichtung zu den in der anderen Laufstreifenhälfte ausgebildeten Profilelementen versetzt sind. Die mittlere Pichtlänge ist dabei der arithmetische Mittelwert der Pitchlängen sämtlicher Pitches.

Der Laufstreifen 1 ist mit in Draufsicht über die Laufstreifenbreite V- förmig zueinander verlaufenden, die Haupt(entwässerungs)rillen des Laufstreifens bildenden Schrägrillen 2, 3 versehen, wobei die Abrollrichtung des Reifens bei Vorwärtsfahrt derart ist, dass die Schrägrillen 2, 3 zuerst mit ihren laufstreifeninnenseitigen Enden in die Bodenaufstandsfläche eintreten. In jeder Laufstreifenhälfte folgt in Umfangsrichtung abwechselnd eine Schrägrille 2 auf eine Schrägrille 3. Die zu dem einen Laufstreifenrand verlaufenden Schrägrillen 2 sind zu den zum anderen Laufstreifenrand verlaufenden Schrägrillen 2 in Umfangsrichtung versetzt. Ferner sind daher auch die zu dem einen Laufstreifenrand verlaufenden Schrägrillen 3 zu den zum anderen Laufstreifenrand verlaufenden Schrägrillen 3 in Umfangsrichtung versetzt. Die Schrägrillen 2 laufen über die Reifenäquatorialebene (Linie A-A) hinaus und münden jeweils in eine zum anderen seitlichen Rand des Laufstreifens verlaufende Schrägrille 2 ein, weisen an dieser daher eine Rillenmündung 2a auf. Die Schrägrillen 3 enden laufstreifeninnenseitig vor der jeweiligen, zum anderen Laufstreifenrand verlaufenden Schrägrille 2. Die Schrägrillen 2 werden nachfolgend auch als "einmündende Schrägrillen 2" und die Schrägrillen 3 werden anschließend auch als "endende Schrägrillen 3" bezeichnet.

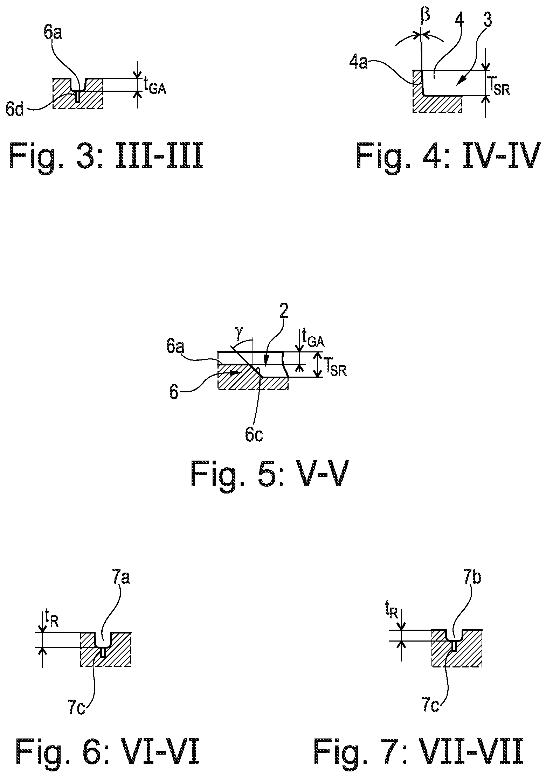

Die Schrägrillen 2, 3 weisen jeweils eine in Draufsicht dem Rillenverlauf folgende Rillenmittellinie m_{SR} auf, sind in radialer Richtung auf die jeweils vorgesehene Profiltiefe T_{SR} (Fig. 4: Schrägrille 3, Fig. 5: Schrägrille 2) von üblicherweise 6,5 mm bis 10,0 mm ausgeführt, weisen eine in Draufsicht senkrecht zur Rillenmittellinie m_{SR} an der Laufstreifenperipherie gemessene, in Richtung Laufstreifenrand kontinuierlich zunehmende Breite b_{SR} von 3,0 mm bis 7,0 mm auf und verlaufen - bezogen auf eine die Enden der zugehörigen Rillenmittellinie m_{SR} verbindende gerade Hilfslinie h₁ - zur Umfangsrichtung unter einem Winkel α von 50° bis 70°. Die zum selben Laufstreifenrand verlaufenden Schrägrillen 2 bzw. 3 verlaufen - bezogen auf die Rillenmittellinien m_{SR} - jeweils parallel zueinander, wobei der Winkel α der endenden Schrägrillen 3 um insbesondere 3° bis 10° größer ist als der Winkel α der einmündenden Schrägrillen 2.

Die Schrägrillen 2, 3 setzen sich beim gezeigten Ausführungsbeispiel jeweils aus einem in Draufsicht leicht gebogen verlaufenden, laufstreifeninnenseitigen Rillenabschnitt 4 und einem zur Umfangsrichtung gegenüber dem laufstreifeninnenseitigen Rillenabschnitt 4 stärker geneigten, schulterseitigen Rillenabschnitt 5 zusammen.

Die laufstreifeninnenseitigen Rillenabschnitte 4 der Schrägrillen 2, 3 enden laufstreifenaußenseitig - bezogen auf die jeweilige Rillenmittellinie m_{SR} - vor dem seitlichen Rand der Bodenaufstandsfläche (Linie L) in einem in axialer Richtung ermittelten Abstand a₁ (Fig. 2) von 10% bis 20% der Breite B der Bodenaufstandsfläche. Die laufstreifeninnenseitigen Rillenabschnitte 4 der endenden Schrägrillen 3 enden laufstreifeninnenseitig - bezogen auf die Rillenmittellinien m_{SR} - in einem in axialer Richtung ermittelten Abstand a₂ (Fig. 2) von 5,0 mm bis 15,0 mm vor der Reifenäquatorialebene (Linie A-A) und weisen an ihrem laufstreifeninnenseitigen Ende eine zur Laufstreifenperipherie verlaufende Endflanke 4a auf, welche, im entlang der Rillenmittellinie m_{SR} ausgerichteten Längsschnitt durch die laufstreifeninnenseitigen Rillenabschnitt 4 betrachtet (vergl. Lage der Linie IV-IV in Fig. 2), zur radialen Richtung unter einem Winkel β (Fig. 4) von bis zu 5°, insbesondere von bis zu 2°, verläuft.

Jede einmündende Schrägrille 2 weist ferner einen Rillenendabschnitt 2b auf, welcher in eine zum jeweils anderen Laufstreifenrand verlaufende Schrägrille 2 einmündet und daher zwischen der Rillenmündung 2a der zugehörigen Schrägrille 2 und der Rillenmündung 2a der in diese Schrägrille 2 mündenden Schrägrille 2 verläuft sowie beim Ausführungsbeispiel Teil des laufstreifeninnenseitigen Rillenabschnittes 4 ist. Gemäß Fig. 2 verläuft der Rillenendabschnitt 2b, in Draufsicht betrachtet und bezogen auf die Rillenmittellinie m_{SR} (Fig. 1), an der Rillenmündung 2a zur Umfangsrichtung unter Winkel α' von 20° bis 40°, insbesondere von 25° bis 35°, bevorzugt von zumindest 30°. Der Winkel α' ist bei einem gebogen verlaufenden, laufstreifeninnenseitigen Rillenabschnitt 4 bzw. bei einer gebogen verlaufenden Schrägrille 2 bezüglich einer an der Rillenmündung 2a an die Rillenmittellinie m_{SR} angelegten Tangente (nicht eingezeichnet) ermittelt. In jedem Rillenendabschnitt 2b ist jeweils eine Grundanhebung 6 ausgebildet, welche bis zur Rillenmündung 2a der zugehörigen Schrägrille 2 reicht oder zu dieser einen entlang der Rillenmittellinie m_{SR} am Niveau des Rillengrundes ermittelten Abstand von bis zu 2,0 mm aufweist. Die Grundanhebung 6 ist in radialer Richtung durch eine Deckfläche 6a (vergl. Fig. 3, Fig. 5), an der Rillenmündung 2a zugewandten Seite durch eine Seitenfläche 6b und an der der Rillenmündung 2a abgewandten Seite durch eine Seitenfläche 6c (vergl. Fig. 5) begrenzt. Die Deckfläche 6a verläuft in einer in radialer Richtung ermittelten konstanten Tiefe t_{GA} (Fig. 3, Fig. 5) von 30% bis 70%, insbesondere von 45% bis 55%, der Profiltiefe T_{SR} (Fig. 5). Die Seitenfläche 6b verläuft, im entlang der Rillenmittellinie m_{SR} ausgerichteten Querschnitt betrachtet, zur radialen Richtung unter einem Winkel von 0° bis 5° und die Seitenfläche 6c verläuft, im erwähnten Querschnitt betrachtet, zur radialen Richtung unter einem Winkel γ (Fig. 5) von 40° bis 50°. Die Grundanhebung 6 weist - ermittelt entlang der Rillenmittellinie m_{SR} sowie am Niveau des Rillengrundes der Schrägrille 2 - eine Länge c_{GA} von 8,0 mm bis 20,0 mm, insbesondere von 10,0 mm bis 16,0 mm, auf. Von der Deckfläche 6a geht ein die Grundanhebung 6 in Längserstreckung mittig durchquerender Einschnitt 6d (Fig. 3) aus, welcher eine gegenüber dem Niveau der Deckfläche 6a, in radialer Richtung ermittelte konstante Tiefe von zumindest 1,5 mm aufweist und höchstens auf die Profiltiefe T_{SR} reicht sowie ferner eine Breite von 0,4 mm bis 0,8 mm aufweist.

Gemäß Fig. 1 verlaufen in jeder Laufstreifenhälfte zwischen in Umfangsrichtung benachbarten Schrägrillen 2, 3 eine weiter laufstreifeninnenseitig ausgebildete Rille 7a und eine weiter laufstreifenaußenseitig ausgebildete Rille 7b, wobei die Rillen 7a, 7b in die jeweiligen laufstreifeninnenseitigen Rillenabschnitte 4 einmünden und jeweils eine Rillenmittellinie m_{R} (Fig. 2) aufweisen. Gemäß Fig. 2 verlaufen die Rillen 7a, in Draufsicht betrachtet, gerade sowie - bezogen auf ihre Rillenmittellinien m_{R} - zur Umfangsrichtung unter einem Winkel δ von 30° bis 40° und sind bezüglich der Umfangsrichtung gegensinnig zu den laufstreifeninnenseitigen Rillenabschnitten 4 geneigt, wobei die in den selben laufstreifeninnenseitigen Rillenabschnitt 4 einmündenden Rillen 7a in geradliniger Verlängerung zueinander und daher miteinander fluchtend verlaufen. Jene der beiden Rillen 7a, welche näher zur Reifenäquatorialebene (Linie A-A) liegt, weist - bezogen auf einen mittig auf ihrer Rillenmittellinie m_{R} liegenden Punkt - zur Reifenäquatorialebene (Linie A-A) in axialer Richtung einen Abstand a₃ von 180% bis 220% des bereits erwähnten Abstandes a₂ auf. Die Rillen 7b verlaufen, in Draufsicht betrachtet, gerade sowie - bezogen auf ihre Rillenmittellinien m_{R} - zur Umfangsrichtung unter einem Winkel ε von 3° bis 20°, insbesondere von 5° bis 15°, und sind bezüglich der Umfangsrichtung gegensinnig zu den laufstreifeninnenseitigen Rillenabschnitten 4 geneigt, wobei die Rillen 7b in Umfangsrichtung bezüglich der axialen Richtung versatzfrei aufeinanderfolgen, sodass diese zur Reifenäquatorialebene (Linie A-A) in axialer Richtung ermittelte, kleinstmögliche übereinstimmende Abstände aufweisen. Die Rillen 7a, 7b weisen an der Laufstreifenperipherie eine in Draufsicht senkrecht zur Rillenmittellinie m_{R} ermittelte konstante Breite b_{R} von 2,0 mm bis 4,0 mm und in radialer Richtung eine konstante Tiefe t_{R} (Fig. 6: Rille 7a, Fig. 7: Rille 7b) von 40% bis 70% der Profiltiefe T_{SR} auf, wobei die Tiefe t_{R} der Rille 7b vorzugsweise um zumindest 1,0 mm geringer ist als die Tiefe t_{R} der Rille 7a. Vom Rillengrund der Rillen 7a, 7b geht jeweils ein mittig ausgebildeter, in radialer Richtung verlaufender Einschnitt 7c (vergl. Fig. 6, Fig. 7) aus, welcher in radialer Richtung eine konstante Tiefe von zumindest 1,5 mm und höchstens der Profiltiefe T_{SR} sowie ferner eine Breite von 0,4 mm bis 0,8 mm aufweist und sich unter dem erwähnten Winkel δ (Rille 7a) bzw. ε (Rille 7b) durch die jeweilige Rille 7a, 7b hindurcherstreckt.

Wie Fig. 1 zeigt, weist der Laufstreifen durch die beschriebene Profilierung in jeder Laufstreifenhälfte schulterseitige Profilblöcke 8, zu diesen benachbarte halbmittige Profilblöcke 9, 10, wobei in Umfangsrichtung ein halbmittiger Profilblock 9 abwechselnd auf einen halbmittigen Profilblock 10 folgt, und von der Reifenäquatorialebene (Linie A-A) geschnittene, mittlere Profilblöcke 11 auf. Die schulterseitigen Profilblöcke 8 erstrecken sich über den Bereich der schulterseitigen Rillenabschnitte 5 und sind laufstreifeninnenseitig von den Rillen 7b begrenzt. Die halbmittigen Profilblöcke 9, 10 sind seitlich von den Rillen 7a, 7b begrenzt, weisen in Draufsicht eine parallelogrammförmige Gestalt auf und sind durch die laufstreifeninnenseitigen Rillenabschnitte 4 der Schrägrille 2, 3 voneinander getrennt, wobei der halbmittige Profilblock 9 beim Abrollen des Reifens bei Vorwärtsfahrt jeweils vor dem halbmittigen Profilblöcke 10, welcher vom Profilblock 9 durch den laufstreifeninnenseitigen Rillenabschnitt 4 einer endenden Schrägrille 3 getrennt ist, in den Untergrund eintritt. Die mittleren Profilblöcke 11 sind von je zwei Rillen 7a und den laufstreifeninnenseitigen Rillenabschnitten 4 der angrenzenden, einmündenden Schrägrillen 2 begrenzt, wobei in die mittleren Profilblöcke 11 jeweils ein Rillenendabschnitt 3a (Fig. 2) der entsprechenden endenden Schrägrille 3 hineinverläuft, wodurch der mittlere Profilblock 11 eine U-förmige Gestalt mit zum jeweils nächstliegenden Laufstreifenrand weisenden U-Schenkel aufweist. Ferner sind die mittlere Profilblöcke 11 durch die bereits erwähnten Grundanhebungen 6 verbunden.

Die weitere Ausgestaltung der Profilblöcke 8, 9, 10, 11 wird nachfolgend anhand von einzelnen Profilblöcke 8, 9, 10, 11 erläutert.

Gemäß Fig. 2 weist der schulterseitige Profilblock 8 an den angrenzenden Schrägrillen 2, 3 an der Laufstreifenperipherie eine beim Abrollen des Reifens bei Vorwärtsfahrt (Pfeil R) zuerst in den Untergrund eintretende, einlaufende Blockkante 8a und eine auslaufende Blockkante 8b sowie ferner eine senkrecht zu und zwischen den Blockkanten 8a, 8b ermittelte maximale Blockbreite b₈ (Breite an der breitesten Stelle) auf. Bei gebogen verlaufenden Blockkanten 8a, 8b erfolgt die Ermittlung der Blockbreite b₈ senkrecht zwischen an die Blockkanten 8a, 8b angelegten, parallel zueinander verlaufenden Tangenten. Der schulterseitige Profilblock 8 ist mit einem Einschnitt 12 versehen, welcher in Draufsicht parallel zu den Blockkanten 8a, 8b verläuft, den schulterseitigen Profilblock 8 innerhalb der Bodenaufstandsfläche in Längserstreckung durchquert, eine konstante Breite von 0,4 mm bis 1,2 mm, insbesondere von bis zu 0,8 mm, in radialer Richtung eine maximale Tiefe (Tiefe an der tiefsten Stelle) von zumindest 3,0 mm und höchstens 100% der Profiltiefe T_{SR} (Fig. 4, Fig. 5), insbesondere von höchstens der um 0,5 mm verringerten Profiltiefe T_{SR}, sowie zu jeder Blockkante 8a, 8b einen senkrecht zu seiner in Draufsicht dem Einschnittverlauf folgenden Einschnittmittellinie m₁₂ ermittelten Abstand a₁₂ von 45% bis 55% der maximalen Blockbreite b₈ aufweist. Ferner ist im schulterseitigen Profilblock 8 eine in Draufsicht gerade in Umfangsrichtung verlaufende, den Einschnitt 12 kreuzende, den Profilblock 8 durchquerende Mikrorille 13 mit einer Breite und einer Tiefe von jeweils 0,2 mm bis 0,6 mm ausgebildet.

Die schulterseitigen Profilblöcke 8 weisen - je nach Pitch - einen Einschnitt 12 oder zwei gleichmäßig über die Blockbreite b₈ verteilte Einschnitte 12 auf.

Der halbmittige Profilblock 9 weist - analog zum schulterseitigen Profilblock 8 - eine einlaufende Blockkante 9a, eine auslaufende Blockkante 9b und eine maximale Blockbreite b₉ auf. Ferner weist der halbmittige Profilblock 9 eine entlang einer zu den Blockkanten 9a, 9b übereinstimmend beabstandeten Blockmittellinie (nicht eingezeichnet) an der Laufstreifenperipherie gemessene Blocklänge c₉ auf und ist mit einem Einschnitt 14 versehen, welcher den halbmittigen Profilblock 9 in Längserstreckung durchquert, eine konstante Breite von 0,4 mm bis 1,2 mm, insbesondere von bis zu 0,8 mm, in radialer Richtung eine maximale Tiefe (Tiefe an der tiefsten Stelle) von 70% bis 100% der Profiltiefe T_{SR}, insbesondere von höchstens der um 0,5 mm verringerten Profiltiefe T_{SR}, sowie zu jeder Blockkante 9a, 9b einen senkrecht zu seiner Einschnittmittellinie m₁₄ ermittelten Abstand a₁₄ von 45% bis 55% der maximalen Blockbreite b₉ aufweist. Ferner ist in jedem halbmittigen Profilblock 9 eine Mikrorille 15 ausgebildet, welche, in Draufsicht betrachtet, gerade sowie zur Umfangsrichtung unter einem Winkel η von 20° bis 30° verläuft, bezüglich der Umfangsrichtung gegensinnig zu den laufstreifeninnenseitigen Rillenabschnitten 4 geneigt ist, den Einschnitt 14 kreuzt, den Profilblock 9 bezüglich seiner Blocklänge c₉ mittig durchquert und eine Breite und eine Tiefe von jeweils 0,2 mm bis 0,6 mm aufweist.

Die halbmittigen Profilblöcke 9 weisen - je nach Pitch - einen Einschnitt 14 oder zwei gleichmäßig über die Blockbreite b₉ verteile Einschnitte 14 auf.

Der halbmittige Profilblock 10 weist - analog zum halbmittigen Profilblock 9 - eine einlaufende Blockkante 10a, eine auslaufende Blockkante 10b, eine maximale Blockbreite b₁₀ und eine Blocklänge c₁₀ auf. Die Blocklänge c₁₀ beträgt 135% bis 155%, insbesondere 140% bis 150%, der Blocklänge c₉ des halbmittigen Profilblockes 9. Im halbmittigen Profilblock 10 ist ein Einschnitt 16 ausgebildet, welcher, in Draufsicht betrachtet, gerade sowie zur Umfangsrichtung unter einem Winkel θ von 20° bis 30° verläuft, den halbmittigen Profilblock 10 bezüglich seiner Blocklänge c₁₀ mittig durchquert, bezüglich der Umfangsrichtung gegensinnig zu den laufstreifeninnenseitigen Rillenabschnitten 4 geneigt ist, eine Breite von 0,6 mm bis 1,0 mm sowie in radialer Richtung eine Tiefe von 70% bis 100%, insbesondere bis zu 75%, der Profiltiefe T_{SR} aufweist und den halbmittigen Profilblock 10 in zwei Blocksegmente 10' teilt. Jedes Blocksegmente 10' ist mit einem Einschnitt 17 versehen, welcher das Blocksegment 10' in Längserstreckung des Profilblockes 10 durchquert, eine konstante Breite von 0,4 mm bis 1,2 mm, insbesondere von bis zu 0,8 mm, in radialer Richtung eine maximale Tiefe (Tiefe an der tiefsten Stelle) von 70% bis 100% der Profiltiefe T_{SR}, insbesondere von höchstens der um 0,5 mm verringerten Profiltiefe T_{SR}, sowie zu jeder Blockkante 10a, 10b einen senkrecht zu seiner Einschnittmittellinie m₁₇ ermittelten Abstand a₁₇ von 45% bis 55% der maximalen Blockbreite b₁₀ aufweist.

Die Blocksegmente 10' weisen - je nach Pitch - jeweils einen Einschnitt 17 oder zwei gleichmäßig über die Blockbreite b₁₀ verteilte Einschnitte 17 auf.

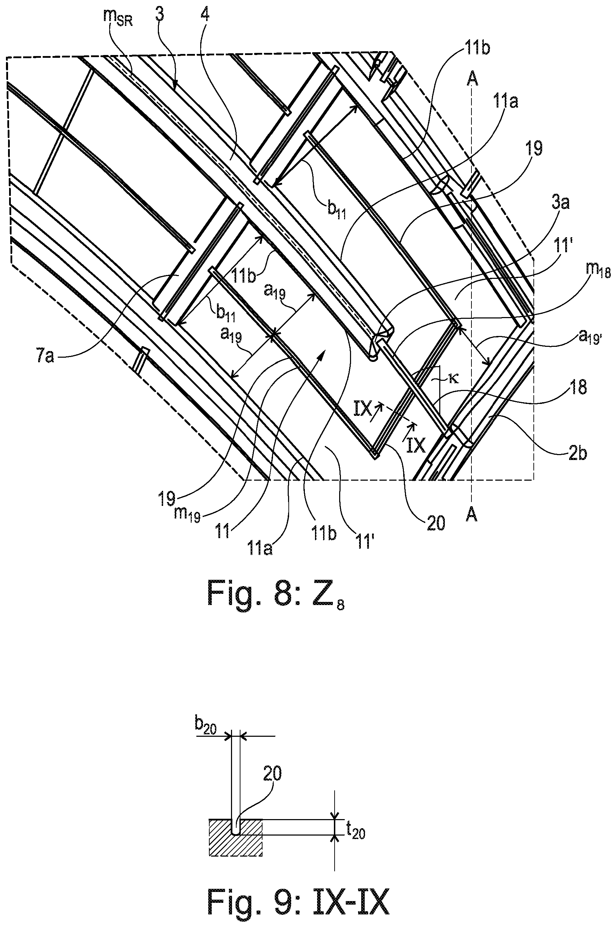

Gemäß Fig. 8 ist der mittlere Profilblock 11 mit einem Kurzeinschnitt 18 versehen, welcher in Draufsicht gerade oder gebogen, bezüglich der Umfangsrichtung gegensinnig zu den laufstreifeninnenseitigen Rillenabschnitten 4 geneigt, zur Umfangsrichtung unter einem Winkel κ von 30° bis 50°, insbesondere von 35° bis 45° sowie ferner zwischen dem freien Ende des laufstreifeninnenseitigen Rillenabschnittes 4 der endenden Schrägrille 3 und dem in Verlängerung zu diesem Rillenabschnitt 4 liegenden Rillenendabschnitt 2b der entsprechenden einmündenden Schrägrillen 3 verläuft, über die Endflanke 3a in den Rillenabschnitt 4 einmündet, eine Breite von 0,4 mm bis 1,6 mm, insbesondere von 0,6 mm bis 1,2 mm, und zumindest über den Großteil seiner Erstreckung in radialer Richtung eine maximale Tiefe (Tiefe an der tiefsten Stelle) von 70% bis 100% der Profiltiefe T_{SR}, insbesondere höchstens der um 0,5 mm verringerten maximalen Profiltiefe T_{SR}, aufweist und den mittleren Profilblock 11 in zwei Blocksegmente 11' teilt. Bevorzugter Weise ist der Winkel κ derart gewählt, dass der Kurzeinschnitt 18 - bezogen auf seine Einschnittmittellinie m₁₈ - in tangentialer Verlängerung der Rillenmittelinie m_{SR} verläuft. "In tangentialer Verlängerung" bedeutet, dass die Einschnittmittellinie m₁₈ in Draufsicht tangential (knickfrei) an das Ende der Rillenmittelinie m_{SR} anschließt. Bei gebogen verlaufenden Kurzeinschnitt 18 bezieht sich der Winkel κ auf eine die Enden der Mittellinie m₁₈ verbindende gerade Linie.

Jedes Blocksegmente 11' weist - analog zu den halbmittigen Profilblöcken 9, 10 - eine einlaufende Blockkante 11a, eine auslaufende Blockkante 11b und eine maximale Blockbreite b₁₁ auf. Jedes Blocksegment 11' ist mit einem Einschnitt 19 versehen, welcher in Längserstreckung der Blocksegmente 11' verläuft, eine konstante Breite von 0,4 mm bis 1,2 mm, insbesondere von bis zu 0,8 mm, in radialer Richtung eine maximale Tiefe (Tiefe an der tiefsten Stelle) von zumindest 3,0 mm und höchstens 100% der Profiltiefe T_{SR}, insbesondere von höchstens der um 0,5 mm verringerten Profiltiefe T_{SR}, sowie zu jeder Blockkante 11a, 11b einen senkrecht zu seiner Einschnittmittellinie m₁₉ ermittelten Abstand a₁₉ von 40% bis 60%, insbesondere von 45% bis 55%, der maximale Blockbreite b₁₁ aufweist. Der Einschnitt 19 mündet in Richtung Laufstreifenaußenseite in die jeweilige Rille 7a ein und endet in Richtung Reifenäquatorialebene (Linie A-A) innerhalb des zugehörigen Blocksegmentes 11' in einem in tangentialer Verlängerung der Einschnittmittellinie m₁₉ ermittelten Abstand a₁₉' von 3,0 mm bis 10,0 mm, insbesondere von 4,0 mm bis 8,0 mm, vor dem Rillenendabschnitt 2b. Zwischen den innerhalb der Blocksegmente 11' liegenden, laufstreifeninnenseitigen Enden der Einschnitte 19 verläuft ein den Kurzeinschnitt 18 kreuzender, zum Kurzeinschnitt 18 und den Einschnitten 19 bezüglich der Umfangsrichtung gegensinnig geneigter Verbindungseinschnitt 20, welcher, in Draufsicht, gerade oder bogenförmig verläuft, in radialer Richtung eine Tiefe t₂₀ (Fig. 9) von 1,2 mm bis 2,5 mm, insbesondere von 1,4 mm bis 2,0 mm, besonders bevorzugt von bis 1,8 mm, und eine Breite b₂₀ (Fig 9) von 0,4 mm bis 1,6 mm, insbesondere von 0,6 mm bis 1,2 mm, aufweist. Die Einschnitte 19 bilden gemeinsam mit dem Verbindungseinschnitt 20 eine U-förmige Einschnittkombination.

Die Erfindung ist auf das beschriebene Ausführungsbeispiel nicht beschränkt. Insbesondere können die Schrägrillen 2, 3 in Draufsicht durchgehend gebogen, durchgehend gerade oder abschnittsweise gerade verlaufen. Die schulterseitigen Profilblöcke 8 und die halbmittigen Profilblöcke 9, 10 können abweichend vom beschriebenen Ausführungsbeispiel mit Einschnitten und/oder Mikrorillen strukturiert sein. Die einmündenden Einschnitte 19 können in den entsprechenden Rillenendabschnitt 2b hineinverlaufen. Sämtliche Einschnitte 12, 14, 17, 19 können in Draufsicht gerade oder abschnittsweise wellenförmig sowie wellenförmig und gleichzeitig gebogen verlaufen. Die Einschnittmittellinie folgt in Draufsicht jeweils der Erstreckungsrichtung des Einschnittes und verläuft daher gerade oder durchgehend gebogen (bogenförmig). Der Abstand a₁₉' ist bei Einschnitten 19 mit geraden Einschnittmittellinien in Verlängerung der Einschnittmittellinie ermittelt. Die Grundanhebungen in den einmündenden Rillenabschnitten sind optional.

### Bezugszeichenliste

- 1: Laufstreifen
- 2: Schrägrille
- 2a: Rillenmündung
- 2b: Rillenendabschnitt
- 3: Schrägrille
- 3a: Rillenendabschnitt
- 4: laufstreifeninnenseitiger Rillenabschnitt
- 4a: Endflanke
- 5: schulterseitiger Rillenabschnitt
- 6: Grundanhebung
- 6a: Deckfläche
- 6b, 6c: Seitenfläche
- 6d: Einschnitt
- 7a, 7b: Rille
- 7c: Einschnitt
- 8: schulterseitiger Profilblock
- 8a: einlaufende Blockkante
- 8b: auslaufende Blockkante
- 9: halbmittiger Profilblock
- 9a: einlaufende Blockkante
- 9b: auslaufende Blockkante
- 10: halbmittiger Profilblock
- 10a: einlaufende Blockkante
- 10b: auslaufende Blockkante
- 10': Blocksegment
- 11: mittlerer Profilblock
- 11': Blocksegment
- 11a: einlaufende Blockkante
- 11b: auslaufende Blockkante
- 12: Einschnitt
- 13: Mikrorille
- 14: Einschnitt
- 15: Mikrorille
- 16: Einschnitt
- 17: Einschnitt
- 18: Kurzeinschnitt
- 19: Einschnitt
- 20: Verbindungseinschnitt
- A-A: Linie (Reifenäquatorialebene)
- a₁, a₂, a₃, a₁₂, a₁₄, a₁₇, a₁₉, a₁₉': Abstand
- L: Linie (seitlicher Rand der Bodenaufstandsfläche)
- B, b_{R}, b_{SR}, b₁₉, b₂₀: Breite
- b₈, b₉, b₁₀, b₁₁: maximale Blockbreite
- c_{GA}: Länge
- c₉, c₁₀: Blocklänge
- h₁: Hilfslinie
- m_{R}, m_{SR}: Rillenmittellinie
- m₁₂, m₁₄, m₁₇, m₁₈, m₁₉: Einschnittmittellinie
- R: Pfeil (Abrollrichtung)
- S₁₂: Pfeil (Sichtrichtung)
- T_{SR}: Profiltiefe
- t_{R}, t_{GA}, t₂₀: Tiefe
- Z₂, Z₈: Detail
- α, α', β, γ, δ, ε, η, θ, κ, λ: Winkel

## Patentansprüche

1. Fahrzeugluftreifen mit einem laufrichtungsgebunden ausgeführten Laufstreifen (1) mit V-förmig zueinander verlaufenden Schrägrillen (2, 3) und jeweils zumindest zwei zwischen in Umfangsrichtung benachbarten Schrägrillen (2, 3) verlaufenden, vorzugsweise bezüglich der Umfangsrichtung gegensinnig zu den Schrägrillen (2, 3) geneigten, weiteren Rillen (7a, 7b),
wobei die Schrägrillen (2, 3) und die weiteren Rillen (7a, 7b) den Laufstreifen in schulterseitige Profilblöcke (8), halbmittige Profilblöcke (9, 10), zu den in der einen Laufstreifenhälfte liegenden, halbmittigen Profilblöcken (9, 10) benachbarte mittlere Profilblöcke (11) und zu den in der anderen Laufstreifenhälfte liegenden, halbmittigen Profilblöcken (9, 10) benachbarte mittlere Profilblöcke (11) gliedern, wobei die Schrägrillen (2, 3) abwechselnd vor der Reifenäquatorialebene (Linie A-A) endende, erste Schrägrillen (3) mit einem in einen mittleren Profilblock (11) hineinverlaufenden Rillenendabschnitt (3a) und die mittleren Profilblöcke (11) mitbegrenzende, zweite Schrägrillen (2) sind,
wobei die zu dem einen Laufstreifenrand verlaufenden ersten Schrägrillen (3) zu den zu dem anderen Laufstreifenrand verlaufenden ersten Schrägrillen (3) und die zu dem einen Laufstreifenrand verlaufenden zweiten Schrägrillen (2) zu den zu dem anderen Laufstreifenrand verlaufenden zweiten Schrägrillen (2) in Umfangsrichtung versetzt sind,
wobei die zweiten Schrägrillen (2) jeweils einen über die Reifenäquatorialebene (Linie A-A) hinausverlaufenden, zwischen zwei mittleren Profilblöcken (11) ausgebildeten und in eine zum jeweils anderen Laufstreifenrand verlaufende zweite Schrägrille (2) einmündenden Rillenendabschnitt (2b) aufweisen, **dadurch gekennzeichnet, dass** in jedem mittleren Profilblock (11) an jeder Seite des in ihn hineinverlaufenden Rillenendabschnittes (3a) der jeweiligen ersten Schrägrille (3) jeweils zumindest ein in Draufsicht zum hineinverlaufenden Rillenendabschnitt (3a) bezüglich der Umfangsichtung gleichsinnig geneigter, in die jeweils angrenzende weitere Rille (7a, 7b) einmündender Einschnitt (19) mit einer Breite von 0,4 mm bis 1,2 mm und einer maximalen Tiefe von zumindest 3,0 mm und höchstens 100% der Profiltiefe (T_{SR}) und zumindest ein zwischen den einmündenden Einschnitten (19) verlaufender und zu diesen bezüglich der Umfangsrichtung gegensinnig geneigter Verbindungseinschnitt (20) mit einer Tiefe (t₂₀) von 1,2 mm bis 2,5 mm und einer Breite (b₂₀) von 0,4 mm bis 1,6 mm verläuft.

2. Fahrzeugluftreifen nach Anspruch 1, **dadurch gekennzeichnet, dass** jeder einmündende Einschnitt (19) innerhalb des mittleren Profilblockes (11) am Verbindungseinschnitt (20) endet, sodass die einmündenden Einschnitte (19) mit dem Verbindungseinschnitt (20) eine U-förmige Einschnittkombination bilden.

3. Fahrzeugluftreifen nach Anspruch 1 oder 2, **dadurch gekennzeichnet, dass** jeder einmündende Einschnitt (19) in einem in Verlängerung seiner Einschnittmittellinie (m₁₉) ermittelten Abstand (a₁₉') von 3,0 mm bis 10,0 mm, insbesondere von 4,0 mm bis 8,0 mm, vor einem den mittleren Profilblock (11) mitbegrenzenden, einmündenden Rillenendabschnitt (2b) der entsprechenden zweiten Schrägrille (2) endet.

4. Fahrzeugluftreifen nach einem der Ansprüche 1 bis 3, **dadurch gekennzeichnet, dass** jeder einmündende Einschnitt (19) zu den an den Schrägrillen (2, 3) ausgebildeten Blockkanten (11a, 11b) des mittleren Profilblockes (11) jeweils einen senkrecht zu seiner Einschnittmittellinie (m₁₉) ermittelten Abstand (a₁₉) von 40% bis 60%, insbesondere von 45% bis 55%, der senkrecht zu und zwischen den Blockkanten (11a, 11b) ermittelten maximalen Blockbreite (b₁₁) des mittleren Profilblockes (11) aufweist.

5. Fahrzeugluftreifen nach einem der Ansprüche 1 bis 4, **dadurch gekennzeichnet, dass** in jedem mittleren Profilblock (11) zwischen den einmündenden Einschnitten (19) ein den mittleren Profilblock (11) in zwei Blocksegmente (11') teilender, den Verbindungseinschnitt (20) kreuzender Kurzeinschnitt (18) mit einer Breite von 0,4 mm bis 1,6 mm, insbesondere von 0,6 mm bis 1,2 mm, und einer maximalem Tiefe von 70% bis 100% der Profiltiefe (T_{SR}) ausgebildet ist, wobei der Kurzeinschnitt (18) in den in den mittleren Profilblock (11) hineinverlaufenden Rillenendabschnitt (3a) der jeweiligen ersten Schrägrille (3) und in den an mittleren Profilblock (11) angrenzenden, einmündenden Rillenendabschnitt (2b) der jeweiligen zweiten Schrägrille (2) einmündet.

6. Fahrzeugluftreifen nach Anspruch 5, **dadurch gekennzeichnet, dass** der Kurzeinschnitt (18), in Draufsicht betrachtet, gerade oder gebogen sowie zur Umfangsrichtung jeweils unter einem Winkel (κ) von 30° bis 50°, insbesondere von 35° bis 45°, verläuft.

7. Fahrzeugluftreifen nach Anspruch 5 oder 6, **dadurch gekennzeichnet, dass** der Kurzeinschnitt (18) - in Draufsicht betrachtet und bezogen auf seine Einschnittmittellinie (m₁₈) - in tangentialer Verlängerung der Rillenmittlinie (m_{SR}) der ersten Schrägrille (3), welche den in den zugehörigen mittleren Profilblock (11) hineinverlaufenden Rillenendabschnitt (3a) aufweist, verläuft.

8. Fahrzeugluftreifen nach einem der Ansprüche 1 bis 7, **dadurch gekennzeichnet, dass** der einmündende Rillenendabschnitt (2b) der zweiten Schrägrillen (2), in Draufsicht betrachtet, an seiner Einmündung zur Umfangsrichtung unter einem Winkel (α') von 20° bis 40°, insbesondere von 25° bis 35°, und bevorzugt von zumindest 30° verläuft.

9. Fahrzeugluftreifen nach einem der Ansprüche 1 bis 8, **dadurch gekennzeichnet, dass** die weiteren Rillen (7a, 7b) derart ausgebildet sind, dass die halbmittigen Profilblöcke (9, 10) abwechselnd erste halbmittige Profilblöcke (9) mit einer an der Laufstreifenperipherie entlang einer zu den Blockkanten (9a, 9b) übereinstimmend beabstandeten Blockmittellinie gemessenen ersten Blocklänge (c₉) und zweite halbmittige Profilblöcke (10) mit einer an der Laufstreifenperipherie entlang einer zu den Blockkanten (10a, 10b) übereinstimmend beabstandeten Blockmittellinie gemessenen, gegenüber der ersten Blocklänge (c₉) größeren, zweiten Blocklänge (c₁₀) sind, wobei beim Abrollen des Reifens bei Vorwärtsfahrt jeweils der erste halbmittige Profilblock (9) vor dem von ihm durch eine erste Schrägrille (3) getrennten, zweiten halbmittigen Profilblock (10) in den Untergrund eintritt.

10. Fahrzeugluftreifen nach Anspruch 9, **dadurch gekennzeichnet, dass** in jedem zweiten halbmittigen Profilblock (10) jeweils ein Einschnitt (16) mit einer Breite von 0,6 mm bis 1,0 mm und einer Tiefe von 70% bis 100%, insbesondere von bis zu 75%, der Profiltiefe (T_{SR}) ausgebildet ist, welcher, in Draufsicht betrachtet, gerade, zur Umfangsrichtung gegensinnig zu den Schrägrillen (2, 3) geneigt und zur Umfangsrichtung unter einem Winkel (θ) von 20° bis 30° verläuft sowie den zweiten halbmittigen Profilblock (10) bezüglich seiner Blocklänge (c₁₀) vorzugsweise mittig in zwei Blocksegmente (10') teilt.

11. Fahrzeugluftreifen nach einem der Ansprüche 1 bis 10, **dadurch gekennzeichnet, dass** die weiteren Rillen (7a), welche sich weiter laufstreifeninnenseitig befinden und in dieselbe endende, erste Schrägrille (3) einmünden, in Draufsicht betrachtet, gerade und miteinander fluchtend verlaufen und/oder dass die weiteren Rillen (7b), welche sich weiter laufstreichaußenseitig befinden, in Draufsicht betrachtet, gerade verlaufen und in Umfangsrichtung bezüglich der axialen Richtung versatzfrei aufeinanderfolgen.

12. Fahrzeugluftreifen nach einem der Ansprüche 1 bis 11, **dadurch gekennzeichnet, dass** im einmündenden Rillenendabschnitt (2b) jeder zweiten Schrägrille (2) jeweils zumindest eine, insbesondere genau eine, die Tiefe der zweiten Schrägrille (2) lokal verringernde Grundanhebung (6) ausgebildet ist, welche zwei mittlere Profilblöcke (11) aneinander anbindet.

13. Fahrzeugluftreifen nach Anspruch 12, **dadurch gekennzeichnet, dass** die Grundanhebung (6) zumindest eines, insbesondere sämtliche, folgender Merkmale aufweist:
a) die Grundanhebung (6) reicht bis zur am einmündenden Rillenendabschnitt (2b) der zweiten Schrägrille (2) liegenden Rillenmündung (2a) oder weist zu dieser einen entlang der Rillenmittellinie (m_{SR}) am Niveau des Rillengrundes ermittelten Abstand von bis zu 2,0 mm auf,
b) die Grundanhebung (6) ist in radialer Richtung durch eine Deckfläche (6a) begrenzt, welche in einer in radialer Richtung ermittelten konstanten Tiefe (t_{GA}) von 30% bis 70%, insbesondere von 45% bis 55%, der Profiltiefe (T_{SR}) verläuft,
c) die Grundanhebung (6) weist - ermittelt entlang der Rillenmittellinie (m_{SR}) der zweiten Schrägrille (2) sowie am Niveau des Rillengrundes der zweiten Schrägrille (2) - eine Länge (c_{GA}) von 8,0 mm bis 20,0 mm, insbesondere von 10,0 mm bis 16,0 mm, auf,
d) die Grundanhebung (6) ist mit einem die Grundanhebung (6) in Erstreckungsrichtung der zweiten Schrägrille (2) insbesondere mittig durchquerender Einschnitt (6d) mit einer Breite von 0,4 mm bis 0,8 mm versehen, welcher vorzugsweise gegenüber dem Niveau der Deckfläche (6a) eine Tiefe von zumindest 1,5 mm aufweist.

14. Fahrzeugluftreifen nach einem der Ansprüche 1 bis 13, **dadurch gekennzeichnet,**
**dass** die Schrägrillen (2, 3), in Draufsicht betrachtet, gerade oder durchgehend gebogen verlaufen oder
**dass** sich die Schrägrillen (2, 3), in Draufsicht betrachtet, jeweils aus einem gerade oder durchgehend gebogen verlaufenden, laufstreifeninnseitigen Rillenabschnitt (4), welcher mittlere Profilblöcke (11) und halbmittige Profilblöcke (10) mitbegrenzt, und einem gerade oder durchgehend gebogen verlaufenden,
laufstreifenaußenseitigen Rillenabschnitt (5), welcher schulterseitige Profilblöcke (8) mitbegrenzt, zusammensetzen.

15. Fahrzeugluftreifen nach einem er Ansprüche 1 bis 14, **dadurch gekennzeichnet, dass** die ersten Schrägrillen (3) laufstreifeninnenseitig - bezogen auf die Rillenmittellinien (m_{SR}) - in einem in axialer Richtung ermittelten Abstand (a₂) von 5,0 mm bis 15,0 mm vor der Reifenäquatorialebene (Linie A-A) enden.

## Claims

1. Pneumatic vehicle tyre with a directional tread (1) having oblique grooves (2, 3) running in a V-shaped manner relative to one another and having in each case at least two further grooves (7a, 7b) which run between oblique grooves (2, 3) that are adjacent in the circumferential direction, preferably so as to be inclined in the opposite direction of the oblique grooves (2, 3) in terms of the circumferential direction,
wherein the oblique grooves (2, 3) and the further grooves (7a, 7b) divide the tread into shoulder-side profile blocks (8), semi-central profile blocks (9, 10), central profile blocks (11) adjacent to the semi-central profile blocks (9, 10) lying in the one half of the tread and central profile blocks (11) adjacent to the semi-central profile blocks (9, 10) lying in the other half of the tread, wherein the oblique grooves (2, 3) are first oblique grooves (3) which terminate alternately in front of the tyre equatorial plane (line A-A) and have a groove end portion (3a) running into a central profile block (11) and second oblique grooves (2) which conjointly delimit the central profile blocks (11),
wherein the first oblique grooves (3) running to the one tread periphery are offset from the first oblique grooves (3) running to the other tread periphery and the second oblique grooves (2) running to the one tread periphery are offset from the second oblique grooves (2) running to the other tread periphery in the circumferential direction,
wherein the second oblique grooves (2) have in each case one groove end portion (2b) which runs beyond the tyre equatorial plane (line A-A), is formed between two central profile blocks (11) and opens into a second oblique groove (2) running towards the respective other tread periphery, **characterized in that** in each central profile block (11), on each side of the groove end portion (3a) of the respective first oblique groove (3) running into the latter, at least one incision (19), which in top view is inclined relative to the incoming groove end portion (3a) in the same direction with respect to the circumferential direction and opens into the respectively adjacent further groove (7a, 7b), runs at a width of 0.4 mm to 1.2 mm and at a maximum depth of at least 3.0 mm and at most 100% of the profile depth (T_{SR}), and at least one connecting incision (20), which runs between the incoming incisions (19) and is inclined relative to the latter in the opposite direction with respect to the circumferential direction, runs at a depth (t₂₀) of 1.2 mm to 2.5 mm and at a width (b₂₀) of 0.4 mm to 1.6 mm.

2. Pneumatic vehicle tyre according to Claim 1, **characterized in that** each incoming incision (19) within the central profile block (11) terminates at the connecting incision (20) in such a way that the incoming incisions (19) conjointly with the connecting incision (20) form a U-shaped incision combination.

3. Pneumatic vehicle tyre according to Claim 1 or 2, **characterized in that** each incoming incision (19) terminates at a spacing (a₁₉'), determined in the extension of the latter's incision centreline (m₁₉), of 3.0 mm to 10.0 mm, in particular of 4.0 mm to 8.0 mm, in front of an incoming groove end portion (2b) of the corresponding second oblique groove (2) that conjointly delimits the central profile block (11).

4. Pneumatic vehicle tyre according to one of Claims 1 to 3, **characterized in that** each incoming incision (19) has in each case a spacing (a₁₉), determined perpendicularly to the latter's incision centreline (m₁₉), from the block edges (11a, 11b) of the central profile block (11) that are formed on the oblique grooves (2, 3) of 40% to 60%, in particular of 45% to 55%, of the maximum block width (b₁₁), determined perpendicularly to and between the block edges (11a, 11b), of the central profile block (11).

5. Pneumatic vehicle tyre according to one of Claims 1 to 4, **characterized in that** in each central profile block (11) between the incoming incisions (19) is formed a short incision (18) which divides the central profile block (11) into two block segments (11'), intersects the connecting incision (20) and has a width of 0.4 mm to 1.6 mm, in particular of 0.6 mm to 1.2 mm, and a maximum depth of 70% to 100% of the profile depth (T_{SR}), wherein the short incision (18) opens into the groove end portion (3a) of the respective first oblique groove (3) running into the central profile block (11) and opens into the incoming groove end portion (2b) of the respective second oblique groove (2) that is adjacent to the central profile block (11).

6. Pneumatic vehicle tyre according to Claim 5, **characterized in that** the short incision (18), when seen in top view, runs so as to be straight or curved, and relative to the circumferential direction runs in each case at an angle (κ) of 30° to 50°, in particular of 35° to 45°.

7. Pneumatic vehicle tyre according to claim 5 or 6, **characterized in that** the short incision (18) - when seen in top view and with respect to its incision centreline (m₁₈) - runs in the tangential extension of the groove centreline (m_{SR}) of the first oblique groove (3) which has the groove end portion (3a) running into the associated central profile block (11).

8. Pneumatic vehicle tyre according to one of Claims 1 to 7, **characterized in that** the incoming groove end portion (2b) of the second oblique grooves (2), when seen in top view, at its mouth runs at an angle (α') of 20° to 40°, in particular of 25° to 35°, and preferably of at least 30°, relative to the circumferential direction.

9. Pneumatic vehicle tyre according to one of Claims 1 to 8, **characterized in that** the further grooves (7a, 7b) are designed in such a manner that the semi-central profile blocks (9, 10) are alternately first semi-central profile blocks (9) having a first block length (c₉), measured on the tread periphery along a block centreline spaced identically from the block edges (9a, 9b), and second semi-central profile blocks (10) having a second block length (c₁₀), larger than the first block length (c₉) and measured on the tread periphery along a block centreline spaced identically from the block edges (10a, 10b), wherein while the tyre rolls during forward travel the first semi-central profile block (9) enters in each case the ground before the second semi-central profile block (10) which is separated from the latter by a first oblique groove (3).

10. Pneumatic vehicle tyre according to Claim 9, **characterized in that** in each second semi-central profile block (10) is formed in each case an incision (16) with a width of 0.6 mm to 1.0 mm and a depth of 70% to 100%, in particular of up to 75%, of the profile depth (T_{SR}), which, when seen in top view, runs straight, is inclined relative to the circumferential direction in the opposite direction of the oblique grooves (2, 3) and runs at an angle (θ) of 20° to 30° relative to the circumferential direction and divides the second semi-central profile block (10) in terms of its block length (c₁₀) preferably centrically into two block segments (10').

11. Pneumatic vehicle tyre according to one of Claims 1 to 10, **characterized in that** the further grooves (7a), which are located further towards the inside of the tread and open into the same terminating first oblique groove (3), when seen in top view, run so as to be straight and mutually co-aligned, and/or **in that** the further grooves (7b), which are located further towards the outside of the tread, when seen in top view, run so as to be straight and are successive in the circumferential direction without an offset in the axial direction.

12. Pneumatic vehicle tyre according to one of Claims 1 to 11, **characterized in that** formed in each case in the incoming groove end portion (2b) of each second oblique groove (2) is at least one, in particular exactly one, raised base (6) which interlinks two central profile blocks (11) and locally reduces the depth of the second oblique groove (2).

13. Pneumatic vehicle tyre according to Claim 12, **characterized in that** the raised base (6) has at least one, in particular all, of the following features:
a) the raised base (6) extends up to the groove mouth (2a) lying at the incoming groove end portion (2b) of the second oblique groove (2), or has therefrom a spacing of up to 2.0 mm, determined along the groove centreline (m_{SR}) at the level of the groove base,
b) the raised base (6) is delimited in the radial direction by a cover surface (6a) which runs at a constant depth (t_{GA}), determined in the radial direction, of 30% to 70%, in particular of 45% to 55%, of the profile depth (T_{SR}),
c) the raised base (6) has a length (c_{GA}) - determined along the groove centreline (m_{SR}) of the second oblique groove (2) and at the level of the groove base of the second oblique groove (2) - of 8.0 mm to 20.0 mm, in particular of 10.0 mm to 16.0 mm,
d) the raised base (6) is provided with an incision (6d) which traverses the raised base (6) in the direction of extent of the second oblique groove (2), in particular traversing the latter centrically, and which has a width of 0.4 mm to 0.8 mm and preferably has a depth of at least 1.5 mm relative to the level of the cover surface (6a).

14. Pneumatic vehicle tyre according to one of Claims 1 to 13, **characterized in that** the oblique grooves (2, 3), when seen in top view, run so as to be straight or continuously curved, or
**in that** the oblique grooves (2, 3), when seen in top view, are each composed of a straight or continuously curved groove portion (4) which is on the inside of the tread and conjointly delimits central profile blocks (11) and semi-central profile blocks (10), and of a straight or continuously curved groove portion (5) which is on the outside of the tread and conjointly delimits shoulder-side profile blocks (8).

15. Pneumatic vehicle tyre according to one of Claims 1 to 14, **characterized in that** the first oblique grooves (3) on the inside of the tread - with respect to the groove centrelines (m_{SR}) - terminate in front of the tyre equatorial plane (line A-A) at a spacing (a₂), determined in the axial direction, of 5.0 mm to 15.0 mm.

## Revendications

1. Pneumatique de véhicule, avec une bande de roulement (1) conçue sous forme directionnelle, avec des rainures obliques (2, 3) s'étendant en forme de V l'une par rapport à l'autre et respectivement au moins deux autres rainures (7a, 7b) s'étendant entre des rainures obliques (2, 3) voisines dans la direction circonférentielle, de préférence inclinées en sens inverse des rainures obliques (2, 3) par rapport à la direction circonférentielle,
les rainures obliques (2, 3) et les autres rainures (7a, 7b) divisant la bande de roulement en blocs de profil côté épaulement (8), blocs de profil semi-centraux (9, 10), blocs de profil centraux (11) voisins des blocs de profil semi-centraux (9, 10) situés dans une moitié de la bande de roulement et blocs de profil centraux (11) voisins des blocs de profil semi-centraux (9, 10) situés dans l'autre moitié de la bande de roulement, les rainures obliques (2, 3) étant alternativement des premières rainures obliques (3) se terminant avant le plan équatorial du pneu (ligne A-A) avec une section d'extrémité de rainure (3a) s'étendant vers l'intérieur dans un bloc de profil central (11) et des deuxièmes rainures obliques (2) délimitant également les blocs de profil centraux (11),
les premières rainures obliques (3) s'étendant vers l'un des bords de la bande de roulement étant décalées dans la direction circonférentielle par rapport aux premières rainures obliques (3) s'étendant vers l'autre bord de la bande de roulement, et les deuxièmes rainures obliques (2) s'étendant vers l'un des bords de la bande de roulement étant décalées dans la direction circonférentielle par rapport aux deuxièmes rainures obliques (2) s'étendant vers l'autre bord de la bande de roulement,
les deuxièmes rainures obliques (2) présentant chacune une section d'extrémité de rainure (2b) s'étendant au-delà du plan équatorial du pneu (ligne A-A), réalisée entre deux blocs de profil centraux (11) et débouchant dans une deuxième rainure oblique (2) s'étendant vers l'autre bord respectif de la bande de roulement, **caractérisé en ce que**, dans chaque bloc de profil central (11), de chaque côté de la section d'extrémité de rainure (3a) de la première rainure oblique (3) respective qui s'étend vers l'intérieur dans celui-ci, s'étend au moins une incision (19) d'une largeur de 0,4 mm à 1,2 mm et d'une profondeur maximale d'au moins 3,0 mm et d'au plus 100 % de la profondeur de profil (T_{SR}), qui, en vue de dessus, est inclinée dans le même sens que la section d'extrémité de rainure (3a) s'étendant vers l'intérieur, par rapport à la direction circonférentielle, et qui débouche dans la rainure supplémentaire respectivement adjacente (7a, 7b), et au moins une incision de liaison (20) s'étendant entre les incisions débouchantes (19) et inclinée en sens opposé par rapport à celles-ci par rapport à la direction circonférentielle, ayant une profondeur (t₂₀) de 1,2 mm à 2,5 mm et une largeur (b₂₀) de 0,4 mm à 1,6 mm.

2. Pneumatique de véhicule selon la revendication 1, **caractérisé en ce que** chaque incision débouchante (19) à l'intérieur du bloc de profil central (11) se termine au niveau de l'incision de liaison (20), de telle sorte que les incisions débouchantes (19) forment avec l'incision de liaison (20) une combinaison d'incisions en forme de U.

3. Pneumatique de véhicule selon la revendication 1 ou 2, **caractérisé en ce que** chaque incision débouchante (19) se termine à une distance (a₁₉') de 3,0 mm à 10,0 mm, notamment de 4,0 mm à 8,0 mm, déterminée dans le prolongement de sa ligne centrale d'incision (m₁₉), avant une section d'extrémité de rainure débouchante (2b) de la deuxième rainure oblique correspondante (2) qui délimite également le bloc de profil central (11).

4. Pneumatique de véhicule selon l'une quelconque des revendications 1 à 3, **caractérisé en ce que** chaque incision débouchante (19) présente par rapport au bords de bloc (11a, 11b) du bloc de profil central (11) réalisés sur les rainures obliques (2, 3) une distance (a₁₉) déterminée perpendiculairement à sa ligne centrale d'incision (m₁₉) de 40 % à 60 %, notamment de 45 % à 55 %, de la largeur de bloc maximale (b₁₁) du bloc de profil central (11) déterminée perpendiculairement aux bords de bloc (11a, 11b) et entre ceux-ci.

5. Pneumatique de véhicule selon l'une quelconque des revendications 1 à 4, **caractérisé en ce que**, dans chaque bloc de profil central (11), entre les incisions débouchantes (19), est réalisée une incision courte (18), qui divise le bloc de profil central (11) en deux segments de bloc (11') et croise l'incision de liaison (20), ayant une largeur de 0,4 mm à 1,6 mm, notamment de 0,6 mm à 1,2 mm, et une profondeur maximale de 70 % à 100 % de la profondeur de profil (T_{SR}), l'incision courte (18) débouchant dans la section d'extrémité de rainure (3a) de la première rainure oblique respective (3) s'étendant vers l'intérieur dans le bloc de profil central (11) et dans la section d'extrémité de rainure débouchante (2b) de la deuxième rainure oblique (2) respective, adjacente au bloc de profil central (11).

6. Pneumatique de véhicule selon la revendication 5, **caractérisé en ce que** l'incision courte (18), considérée en vue de dessus, s'étend de manière rectiligne ou courbée ainsi que, par rapport à la direction circonférentielle, respectivement selon un angle (κ) de 30° à 50°, notamment de 35° à 45°.

7. Pneumatique de véhicule selon la revendication 5 ou 6, **caractérisé en ce que** l'incision courte (18) - considérée en vue de dessus et par rapport à sa ligne centrale d'incision (m₁₈) - s'étend dans le prolongement tangentiel de la ligne centrale de rainure (m_{SR}) de la première rainure oblique (3), qui présente la section d'extrémité de rainure (3a) s'étendant vers l'intérieur dans le bloc de profil central correspondant (11).

8. Pneumatique de véhicule selon l'une quelconque des revendications 1 à 7, **caractérisé en ce que** la section d'extrémité de rainure débouchante (2b) des deuxièmes rainures obliques (2) s'étend, considérée en vue de dessus, à son embouchure par rapport à la direction circonférentielle selon un angle (α') de 20° à 40°, notamment de 25° à 35°, et de préférence d'au moins 30°.

9. Pneumatique de véhicule selon l'une quelconque des revendications 1 à 8, **caractérisé en ce que** les autres rainures (7a, 7b) sont réalisées de telle sorte que les blocs de profil semi-centraux (9, 10) sont alternativement des premiers blocs de profil semi-centraux (9) ayant une première longueur de bloc (c₉) mesurée à la périphérie de la bande de roulement le long d'une ligne centrale de bloc espacée de manière identique par rapport aux bords de bloc (9a, 9b) et des deuxièmes blocs de profil semi-centraux (10) ayant une deuxième longueur de bloc(c₁₀), supérieure à la première longueur de bloc (c₉), mesurée à la périphérie de la bande de roulement le long d'une ligne centrale de bloc espacée de manière identique par rapport aux bords de bloc (10a, 10b), lors du roulement du pneu en marche avant, le premier bloc de profil semi-central (9) pénétrant à chaque fois dans le sol avant le deuxième bloc de profil semi-central (10) qui en est séparé par une première rainure oblique (3).

10. Pneumatique de véhicule selon la revendication 9, **caractérisé en ce que** dans chaque deuxième bloc de profil semi-central (10) est réalisée respectivement une incision (16) d'une largeur de 0,6 mm à 1,0 mm et d'une profondeur de 70 % à 100 %, notamment de jusqu'à 75 %, de la profondeur de profil (T_{SR}), laquelle, considérée en vue de dessus, est inclinée en sens inverse des rainures obliques (2, 3) par rapport à la direction circonférentielle et s'étend par rapport à la direction circonférentielle selon un angle (θ) de 20° à 30° et divise le deuxième bloc de profil semi-central (10) de préférence au centre en deux segments de bloc (10') par rapport à sa longueur de bloc (c₁₀).

11. Pneumatique de véhicule selon l'une des revendications 1 à 10, **caractérisé en ce que** les autres rainures (7a), qui se trouvent plus à l'intérieur de la bande de roulement et débouchent dans la première rainure oblique (3) se terminant dans celles-ci, s'étendent, considérées en vue de dessus, de manière rectiligne et alignées les unes avec les autres, et/ou **en ce que** les autres rainures (7b), qui se trouvent plus à l'extérieur de la bande de roulement, s'étendent de manière rectiligne, considérées en vue de dessus, et se succèdent sans décalage dans la direction circonférentielle par rapport à la direction axiale.

12. Pneumatique de véhicule selon l'une quelconque des revendications 1 à 11, **caractérisé en ce que**, dans la section d'extrémité de rainure débouchante (2b) de chaque deuxième rainure oblique (2), est réalisé au moins un, notamment exactement un, rehaussement de base (6) réduisant localement la profondeur de la deuxième rainure oblique (2), qui relie deux blocs de profil centraux (11) l'un à l'autre.

13. Pneumatique de véhicule selon la revendication 12, **caractérisé en ce que** le rehaussement de base (6) présente au moins l'une, notamment toutes les caractéristiques suivantes :
a) le rehaussement de base (6) s'étend jusqu'à l'embouchure de rainure (2a) située au niveau de la section d'extrémité de rainure débouchante (2b) de la deuxième rainure oblique (2) ou présente par rapport à celle-ci une distance de jusqu'à 2,0 mm, déterminée le long de la ligne centrale de rainure (m_{SR}) au niveau du fond de rainure,
b) le rehaussement de base (6) est limité dans la direction radiale par une surface de recouvrement (6a) qui s'étend à une profondeur constante (t_{GA}) déterminée dans la direction radiale, de 30 % à 70 %, notamment de 45 % à 55 %, de la profondeur de profil (T_{SR}),
c) le rehaussement de base (6) présente, mesuré le long de la ligne centrale de rainure (m_{SR}) de la deuxième rainure oblique (2) et au niveau du fond de rainure de la deuxième rainure oblique (2), une longueur (c_{GA}) de 8,0 mm à 20,0 mm, notamment de 10,0 mm à 16,0 mm,
d) le rehaussement de base (6) est pourvu d'une incision (6d) d'une largeur de 0,4 mm à 0,8 mm, qui traverse notamment au centre le rehaussement de base (6) dans la direction d'extension de la deuxième rainure oblique (2) et qui présente de préférence une profondeur d'au moins 1,5 mm par rapport au niveau de la surface de recouvrement (6a).

14. Pneumatique de véhicule selon l'une quelconque des revendications 1 à 13, **caractérisé**
**en ce que** les rainures obliques (2, 3), considérées en vue de dessus, s'étendent de manière rectiligne ou courbée de manière continue, ou
**en ce que** les rainures obliques (2, 3), considérées en vue de dessus, se composent respectivement d'une section de rainure (4) s'étendant de manière rectiligne ou courbée de manière continue, située à l'intérieur de la bande de roulement, qui délimite également des blocs de profil centraux (11) et des blocs de profil semi-centraux (10), et d'une section de rainure (5) s'étendant de manière rectiligne ou courbée de manière continue, située à l'extérieur de la bande de roulement, qui délimite également des blocs de profil côté épaulement (8).

15. Pneumatique de véhicule selon l'une quelconque des revendications 1 à 14, **caractérisé en ce que** les premières rainures obliques (3) se terminent, du côté intérieur de la bande de roulement - par rapport aux lignes centrales de rainure (m_{SR}) - à une distance (a₂) de 5,0 mm à 15,0 mm, déterminée dans la direction axial, avant le plan équatorial du pneu (ligne A-A).
